# EUROPEAN PATENT APPLICATION

(11) **EP 2 746 726 A1**
(43) Date of publication of application: **25.06.2014**
(21) Application number: 12199294.5
(22) Date of filing: 21.12.2012
(51) Int. Cl.: G01C 21/32, G01C 21/36, H04W 4/02

(54) **System and method for tagging an audio signal to an object or a location; system and method of playing back a tagged audio signal**

(71) Applicant: GN Store Nord A/S, 2750 Ballerup (DK)
(72) Inventor: Jensen, Jakob, 2650 Hvidovre (DK); Mossner, Peter, 2770 Kastrup (DK); Sörensen, Peter Schou, 2500 Valby (DK); Urup, Kathrine Steen, 2500 Valby (DK); Johansen, Lars Klint, 2500 Valby (DK)
(74) Representative: Zacco Denmark A/S

(57) **Abstract**

This invention relates to an audio tagging system configured to associate an audio signal to an object or a geographic point of interest in a field of view observed in a direction of observation from a geographic point of observation, the audio tagging system comprising and interfacing an audio unit configured to provide an audio signal; a selecting unit configured to move about a selector in the field of view and to select an object or a geographic point of interest in the field of view; a tagging unit configured to create a tag associating the selected object or the selected geographic point of interest with the provided audio signal; and a data storage connection unit configured to connect to at least one tag database and to store the tag associated to the selected audio signal with at least one selected object or a selected geographic point of interest.

This invention further relates to a method of tagging an audio signal to an object and to an audio playback system and a method for playing back an audio signal.

## Description

### Field of invention

This invention relates to an audio tagging system configured to associate an audio signal to an object or a geographic point of interest in a field of view observed in a direction of observation from a geographic point of observation, the audio tagging system comprising and interfacing an audio unit configured to provide an audio signal; a selecting unit configured to move about a selector in the field of view and to select an object or a geographic point of interest in the field of view; a tagging unit configured to create a tag associating the selected object or the selected geographic point of interest with the provided audio signal; and a data storage connection unit configured to connect to at least one tag database and to store the tag associated to the selected audio signal with at least one selected object or a selected geographic point of interest.

This invention further relates to a method of tagging an audio signal to an object and to an audio playback system and a method for playing back an audio signal.

### Background of the invention

Geographical systems for navigation and for guiding do exist and operate by providing information about a particular object or a location in the vicinity of the user.

### Summary

An objective of this invention is to provide means and ways that will allow a user to associate audio information to an object or a point of interest.

Another objective of this invention is to provide a more effective system and method of doing so, and yet another objective is to provide alternative ways of associating audio information to an object or a point of interest.

Likewise it is an objective of this invention to provide a system and a method of playing back audio information associated with a particular or selected object or point of interest.

A particular objective is to provide a system that may be head worn and used naturally by a user to ease and simplify the task of associating or tagging an audio sequence with an object or a point of interest being observed.

An objective of the invention is achieved by an audio tagging system configured to associate an audio signal with an object or a geographic point of interest in a field of view observed in a direction of observation from a geographic point of observation, the audio tagging system comprising and interfacing
- an audio unit configured to provide an audio signal;
- a selecting unit configured to move about a selector in the field of view and to select an object or a geographic point of interest in the field of view;
- a tagging unit configured to create a tag associating the selected object or the selected geographic point of interest with the provided audio signal;
- a data storage connection unit configured to connect to at least one tag database and to store the tag associated to the selected audio signal with at least one selected object or a selected geographic point of interest.

Thus an object of the invention may be achieved in an effective manner.

The audio unit may have an audio recorder with a microphone or means for attaching a microphone. A person skilled in the art will appreciate a multiplicity of off-the-shelf audio units that may be configured to provide an audio signal. Typically the audio signal will have to be recorded or is a pre-recorded signal stored on some storage media either locally or remotely.

The field of view may be the view that a user sees with eyes or through a viewing device. In the latter case the field of view is simply a transformation of one view to another view, where the transformation is determined by the viewing device.

The field of view may be provided as an image or it may be displayed on a screen such as a computer screen or a reflective screen.

It is understood that the selecting unit operates within the boundaries of the field of view.

In one or more embodiments, the field of view may be an image displayed on a computer screen, and a selector may be a pointer operating within the limits of the screen and controlled by for example a computer mouse or a touch pad.

In one or more embodiment, the selecting unit may be configured to provide a point as a selector in the field or landscape as observed as the field of view. The selector may be a beam of light from a laser or a spot light.

In one or more embodiments, the selector may be determined or defined by a line or curve of interest. Such "invisible" selector may be configured to follow the movement(s) of a head, i.e. the direction of the nose, an arm or a finger. Turning the head may move about the selector in the field of view. Turning the head may move about the selector in the field of view. Thus, the selector may be moved upwards, down wards, sideward, etc in the field of view. Pointing a finger may serve as a selector of a point of interest or an object in the field of view.

In one or more embodiments, the field of view may be displayed on a screen and the selector may be implemented as a head worn device so that changing the orientation of a head will move about a focus point on the screen i.e. correspondingly in the field of view.

The tagging unit may be configured as a record that points to the audio signal and to a point of interest or an object. The tagging may also be a link.

The tag, the link, or the association may be stored in a separate list and kept in a separate storage, but it may also be stored along with either the record holding information about the point of interest or object or vice versa with audio signal.

Alternatively or additionally, tagging may also include storing an audio signal along with data about a selected point of interest or data about an object.

According to one or more embodiments of the invention, the selecting unit is further configured to estimate and place the selector at a geographic point of interest or an object in the field of view as a function of a direction of observation and a geographic point of observation.

Thus having coordinates of a geographic point of observation, obtained by for example a GPS or by triangulation using a wireless network and a direction of observation, it is possible to generate a location or a point in the field of view that correspond to geographic coordinates of the location of the selector. This may be done by geometric transformations implemented from scratch or by using a selection of readily available geo-codes.

According to one or more embodiments of the invention, it may further comprise a geographical data retrieval unit configured to retrieve a geographical map comprising geographical information or object information.

Thereby access to geographical data from established geo-data services or from private or custom built data services is enabled.

The geographic data retrieval unit may connect wireless over for example the Internet to data services and a person skilled in the art will appreciate the standards and the interfaces to data retrieval from such databases.

According to one or more embodiments of the invention, the selecting unit is further configured to estimate a geographic point of interest or an area as an intersection between a line of sight and a surface or an object in a field of view or as a distance along a line of sight in a field of view.

The line of sight may be a straight line of sight, but it may also be a curved line of sight. The line of sight may be in the straight viewing direction of a user or offset by some default offset.

In one or more embodiments, the line of sight may intersect or cross a surface of the ground or a building and thereby define a point that defines a selected point. The line of sight may be estimated by an orientation unit; preferably by a processing unit and as a function of data from a first gyroscope or magnetic compass in the form of a tri-axis magnetometer for determining head yaw or a second gyroscope for determining head pitch in the orientation unit; most preferably by data from both a first and a second gyroscope.

Thus the orientation unit may provide an orientation by means of compass and gyroscopes. The orientation unit may be implemented as a separate unit to be head worn or handheld. Yaw and pitch may be of the head, but may also be understood as yaw and pitch of a hand or the unit itself.

The audio tagging system may be configured to be held or worn and operated by a user in a field as intended and in the form of a head set, an audio head set, a visual head set, i.e. eye wear such as glasses, a smart phone, a mobile, a Personal Display Adapter, a camera, a tablet, a laptop or any similarly configured devices.

Thus the audio tagging system may be implemented in a variety of units with particular advantages and predetermined intended uses. In a camera, the lens and sensor configuration may serve as a starting point for determining an orientation. In a Smartphone, an arrow may be programmed to be displayed on a screen and the device may be used as a pointer. Likewise a head set may be configured to read the orientation of the user and thereby reflect a direction of interest.

The audio tagging system may be configured to be stationary and to be operated by a user as intended and in the form of a personal computer, a work station, a control room, a projector setup, a simulator, or any other stationary setting.

Thus, the audio tagging system may be used in a stationary setting. This is particularly useful for studio recording and editing content as well as for viewing or presenting audible content to an audience.

The audio tagging system may furthermore comprise a geographic orientation unit configured for associating the field of view with a geographic point of observation and from there a direction of observation.

This may enable a unit to be easily operated by a user. The orientation unit may comprise compasses or gyroscopes configured to provide an absolute or relative orientation of the unit.

The audio tagging system may further be configured to provide a field of view observed in a direction of observation from a geographic point of observation; the field of view may be an image, such as a digital image.

Thus the unit may be used to record views prepared with data for later tagging and or editing of audios.

The field of view may be recorded and stored on the device and subsequently an audio signal may be tagged and then finally stored, such as remotely on a central data server.

An objective of the invention may in one aspect of the invention be achieved by a method of tagging an audio signal to an object or a geographic point of interest in a field of view observed in a direction of observation from a geographic point of observation; the method comprising steps of:
- selecting an object or a geographic point of interest in the field of view
- tagging the selected object or selected geographic point of interest with a provided audio signal or providing an audio signal; and
- storing the tag associated to the selected audio signal with at least one selected object or a selected geographic point of interest.

Using this method provides a particularly simple process of associating an audio with a point of interest or an object. The skilled person will be able to modify the method according to special needs and to implement the steps performed by the units as further steps in the method.

The method may further comprise steps of
- determining a geographic point of observation and from there a direction of observation in of a field of view; and
- selecting a geographic point of interest or an area as an intersection between a line of sight and a surface or an object in a field of view or as a distance along a line of sight in a field of view, wherein is estimated by a orientation unit.

Hereby tagging of an audio signal to an object or a point of interest may be performed as an integral part of the user since the intersection of the line of sight with a surface or a building determines the location where to the audio signal shall be tagged.

An objective of the invention may be achieved by an audio playback system configured to play an audio signal tagged to an object or a geographic point of interest in a field of view observed in a direction of observation from a geographic point of observation, the audio playing system comprising and interfacing
- a selecting unit configured to select an object or a geographic point of interest in the field of view;
- a data storage connection unit configured to connect to at least one database and to retrieve an audio signal tagged to at least one selected object or a selected geographic point of interest;
- an audio unit configured to sound the tagged audio signal.

The selecting unit may be further configured to estimate a geographic point of interest or an area as an intersection between a line of sight and a surface or an object in a field of view or as a distance along a line of sight in a field of view and where the line of sight is estimated by an orientation unit; preferably by a processing unit and as a function of data from a first gyroscope or magnetic compass in the form of a tri-axis magnetometer for determining head yaw or a second gyroscope for determining head pitch in the orientation unit; most preferably by data from both a first and a second gyroscope.

This provides an easy to use device that integrates with the user and is precise and reliable. A person skilled in the art will appreciate the existence of multiple alternative and readily available gyroscopes and compasses that may be used as building blocks and provide orientation data that may be readily used or easily transformed in format to a required format of data.

The audio playback system may be configured to be held or worn and operated by a user in a field as intended and in the form of a head set, an audio head set, a visual head set, i.e. eye wear such as glasses, a smart phone, a mobile, a Personal Display Adapter, a camera, a tablet, a laptop, or any such similarly configured device.

Thus the unit may be integrated into known apparatuses being already configured with elements and well known interfaces for usage. Furthermore, some unit such as a programmable smartphone, a tablet or a camera may easily be reconfigured, modified or upgraded to include the additional technical features and functions.

An objective of the invention may be achieved by a method of playing back an audio signal tagged to an object or a geographic point of interest in a field of view observed in a direction of observation from a geographic point of observation; the method comprising steps of:
- selecting an object or a geographic point of interest in the field of view;
- retrieving an audio signal that has been tagged to the selected object or the geographic point of interest to the audio signal; and
- sounding the audio signal.

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout. Like elements will, thus, not be described in detail with respect to the description of each figure.

### Brief Description of Drawings

Embodiments of the invention will be described in the figures, whereon:
Fig. 1 illustrates an embodiment of an audio tagging system configured to tag an audio sequence with an object or a point of interest;
Fig. 2 illustrates an audio tagging system further including a geographical data retrieval unit;
Fig. 3 illustrates an audio tagging system where the selecting unit is configured to estimate a geographic point of interest;
Fig. 4 illustrates an audio tagging system further comprising an orientation unit;
Fig. 5 illustrates the use of an audio tagging system configured to establish a line of sight, and how to select a point of interest;
Fig. 6 illustrates an audio playback system configured to playback an audio signal tagged to a point of interest or an object;
Fig. 7 illustrates multiple implementations of an audio tagging system that can be used in a field;
Fig. 8 illustrates multiple implementations of an audio tagging system that can be used as a stationary system to tag audio signals with object or points of interests,
Fig. 9 shows an audio tagging system or an audio playback system implemented as a hearing device with an inertial orientation unit,
Fig. 10 illustrates a schematic of an audio tagging system or an audio playback system; and
Fig. 11 illustrates an environment with databases/archives with which an audio tagging system or an audio playback system operates and interacts with.

### Detailed Description

| **Item** | **No** |
|---|---|
| Audio Tagging System | 1 |
| Audio Signal | 2 |
| Object | 3 |
| Geographic Point of Interest | 4 |
| Field of View | 5 |
| Direction of observation | 6 |
| Geographic Point of Observation | 7 |
| Audio Unit | 10 |
| Selected audio signal | 11 |
| Selection Unit | 20 |
| Selector | 21 |
| Selected geographic point of interest | 22 |
| Selected object | 23 |
| Estimator | 24 |
| Geographical data retrieval unit | 25 |
| Geographic Map | 26 |
| Geographic Information | 27 |
| Object information | 28 |
| Tagging Unit | 30 |
| Tag | 31 |
| Data Storage connection Unit | 40 |
| Database | 41 |
| Remote Communication Unit | 50 |
| Remote connection | 51 |
| Internet | 52 |
| Orientation unit | 60 |
| Gyroscope | 61 |
| Magnetic compass | 62 |
| Tri.axis magnetometer | 63 |
| GPS | 65 |
| Satellite | 66 |
| Position data network | 67 |
| Field of view capture/display unit | 70 |
| User | 71 |
| Surface | 72 |
| Line of sight | 73 |
| Capture/image | 74 |
| Audio Playback System | 101 |
| Headset | 110 |
| Camera | 112 |
| Handheld mobile/PDA | 114 |
| Tablet | 116 |
| Laptop/Computer | 118 |
| Projector setup | 120 |
| Control room | 122 |
| Simulator | 124 |
| Headband | 151 |
| Loudspeakers | 152 |
| Ear pad | 153 |
| microphone boom | 154 |
| Microphone | 155 |
| Voice microphone | 162 |
| Ambient microphones | 163 |
| Tri-axis MEMS gyros | 166 |
| Accelerometers | 167 |
| Sound generator | 172 |
| Filters | 174 |
| Computational unit | 220 |

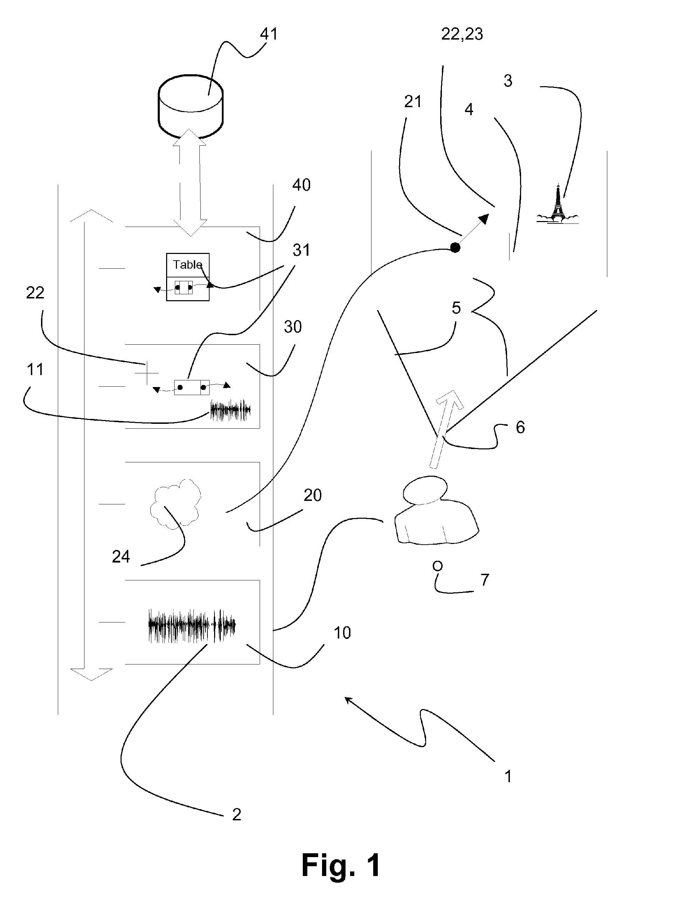

Fig. 1 shows an audio tagging system 1 configured to associate an audio signal 2 to an object 3 or a geographic point of interest 4 in a field of view 5. The field of view 5 can be framed and has an outer perimeter. The field of view 5 is observed in a direction of observation 6 from a geographic point of observation 7.

The audio tagging system 1 is in this embodiment configured with an audio unit 10, a selecting unit 20, a tagging unit 30, and a data storage unit 40.

The audio unit 10 may be configured to provide an audio signal 2 such a recording of information, a warning tone, or a piece of music just to mention a few possible possibilities. The audio unit 10 may have storage capabilities or be configured to access a remote storage of audio files or audio files sequences 2.

The format or the encoding of the audio signal 2 may be any standard digital format such as FLAC, WAV, MP3, etc. Alternatively the audio signal 2 may be in analogue format.

The selecting unit 20 is configured to move about a selector 21 in the field of view 5. The selector 21 may be a pointer or an arrow as know from a computer screen and computer mouse configuration or alternative implementations. The selector 21 may also be an invisible but well defined point or area like a spot or a laser light operating in the space. The selector 21 may also be a well defined spot, point or area that is invisible but determined by the direction of observation 6. This may be the centre of a viewing direction or a predetermined offset from the centre of viewing direction.

It is understood that the selector 21 can be moved about in the space or field of view and is configured to be able to select or choose. In the case of a computer mouse implementation, a selection may be made by a click. In other embodiments the selection action may be the push of a button or by blinking an eye or some other distinct movement of a body part.

The selecting unit 20 may further be configured to keep track of when an object 3 or a point of interest 4 is selected. In that case an object 3 becomes a selected object 23 and a point of interest 4 becomes a selected point of interest 22. This may be done by flagging an object or a point of interest or by keeping a separate list of selected items.

The audio tagging system 1 further comprises a tagging unit 30 configured to create a tag 31 associating a selected object 23 or a selected geographic point of interest 22 with a provided audio signal 2.

The tag 31 may be made or created by linking a record with a first pointer to an address to the audio signal 2 and with a second pointer to an address of the object 3 or point of interest 4 that are selected 23, 22.

The audio tagging system 1 may further be configured with a data storage connection unit 40 configured to connect to at least one tag database 41 and to store a generated, edited or modified tag 31 that associates a selected audio signal 2 with at least one selected object 23 or a selected geographic point of interest 22.

In this embodiment the audio tagging unit 1 and in particular the selecting unit 20 comprises an estimator 24 that will enable the selecting unit 20 to estimate and place the selector 21 at a geographic point of interest 4, 22 or an object 3, 23 in the field of view as a function of a direction of observation 6 and a geographic point of observation 7.

The estimator 24 may be implemented as a piece of code and may have several individual algorithms configured to perform the operations.

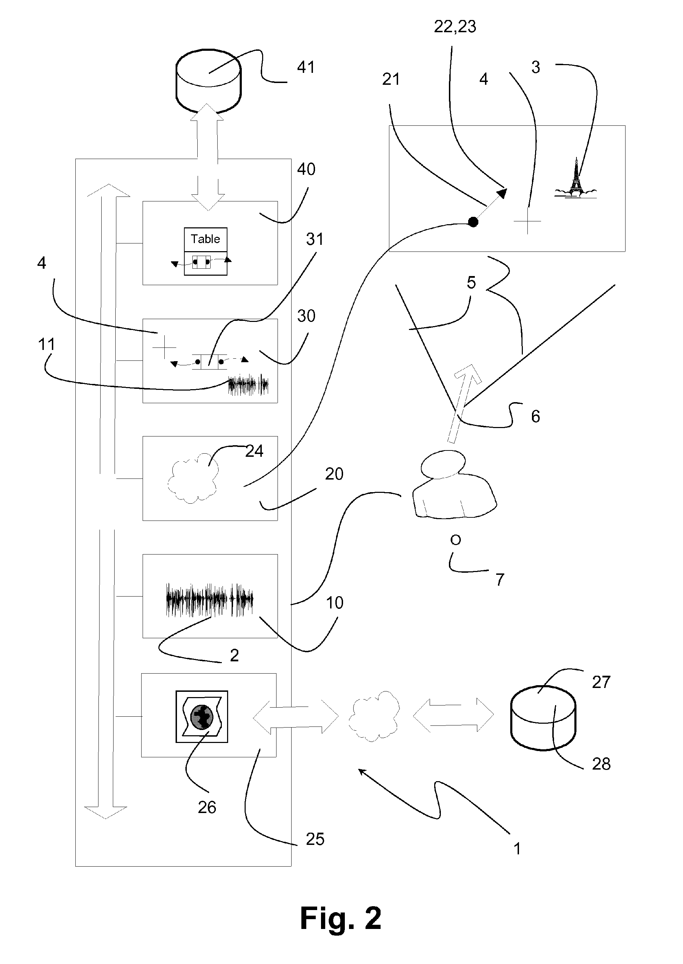

Fig. 2 illustrates an audio tagging system in continuation of figure 1 a further embodiment that can be an addition to those features disclosed in figure 1 or the embodiments in the following.

The embodiment depicted further comprising a geographical data retrieval unit 25 configured to retrieve a geographical map 26 comprising geographical information 27 or object information 28.

In this embodiment the geographical map 26, geographical information 27 or object information 28 is provided on a remote server and the configuration of the geographical data retrieval unit 25 is so that those data can be retrieved for example via an internet connection or via a cloud.

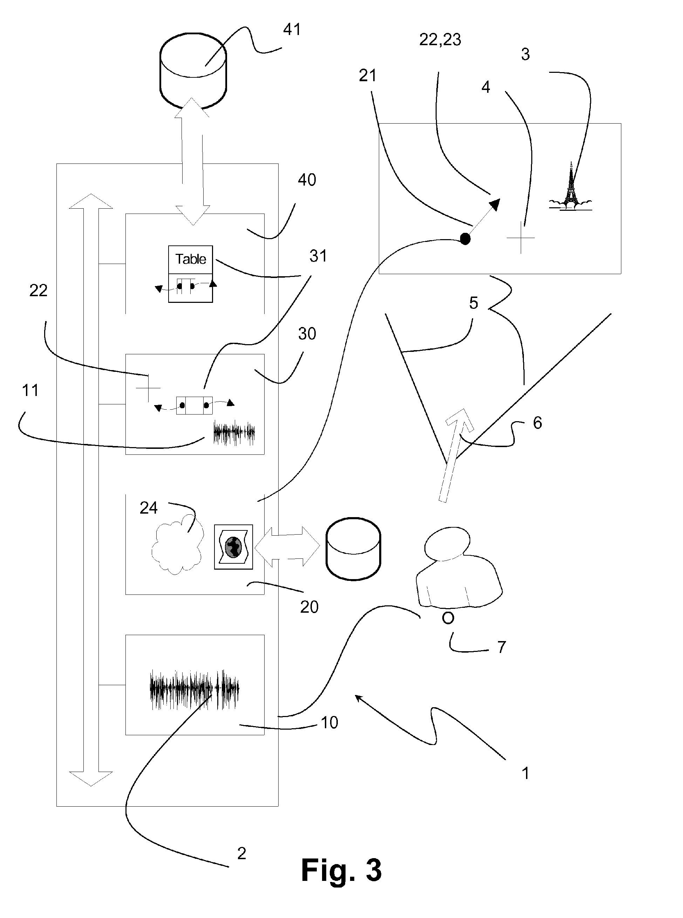

Fig. 3 illustrates an audio tagging system in continuation of figure 1 and figure 2 a further embodiment that can be an addition to those features disclosed or those to be disclosed in the following.

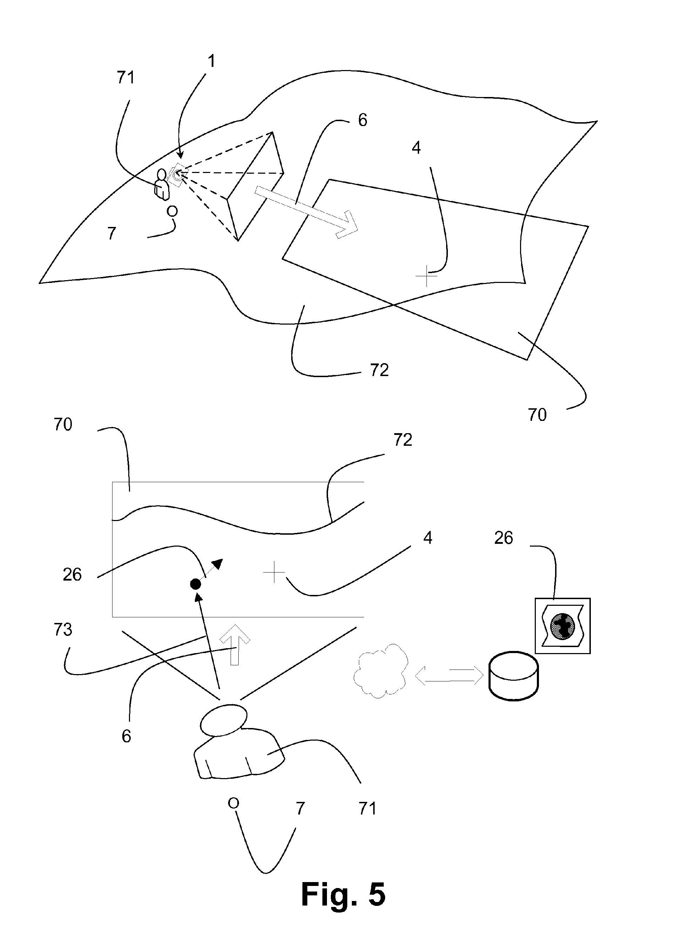

An embodiment of the audio tagging system 1 may be has illustrated where the selecting unit 20 is further configured to estimate a geographic point of interest 4 or an area as an intersection between a line of sight and a surface or an object in a field of view or as a distance along a line of sight in a field of view 5. An embodiment that will be described in more details in figure 5, but it is noted that the estimator 24 is configured to operate in a map obtained from a geographical information server via a data connection, which is preferably a wireless connection.

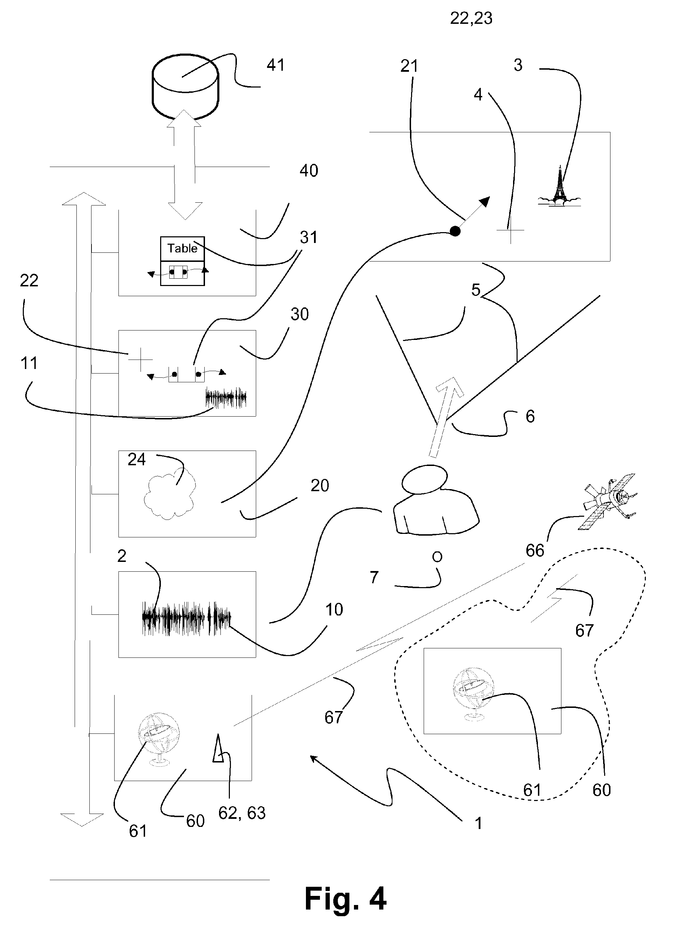

Fig. 4 illustrates an audio tagging system 1 in continuation of figure 1 to figure 3 with a further embodiment that can be an addition to those features disclosed or those to be disclosed in the following.

In an embodiment of an audio tagging system 1, a line of sight is estimated by a orientation unit 60; preferably by a processing unit and as a function of data from a first gyroscope 61 or magnetic compass 62 in the form of a tri-axis magnetometer 63 configured to obtain a direction or an orientation of the device.

Furthermore the orientation unit 60 may have a global positioning system (GPS) 65 with communication with a satellite 66 to determine the actual location or position of the unit. It is noted that the GPS system is only one such position data network 67 amongst multiple other systems that can be implemented to provide a current location. Such other systems include Wi-Fi-networks, mobile networks and combinations of such networks.

Another configuration is where the orientation unit is a separate unit to the other units 10, 20, 30, 40, 50 and configured for determining the orientation 6 as a function of head yaw or a second gyroscope for determining head pitch in the orientation unit 60; most preferably by data from both a first and a second gyroscope.

Fig. 5 illustrates an example how a field of view 70 capture or image on a display is observed by a user 71.

The user 71 is at a point of observation 7 in a field or on a surface 72 and viewing in a direction of observation 6. In the field on the surface 72 there is a point of interest 4 that results in a mapping into a point of interest 4 in the field of view 70.

The user 72 is with the audio tagging unit 1 able to operate a selector 21 in the field of view 70. The audio tagging system 1 is further configured to retrieve information about a corresponding map 26 that represent the field of view 70 based on the point of observation 7, the direction of observation 6.

The audio tagging system 1 is configured so as to provide a line of sight 73, which will control the selector 26 in the field of view 70. In one configuration the line of sight 73 is aligned with the direction of observation 6, but the line of sight 73 may be offset statically or dynamically.

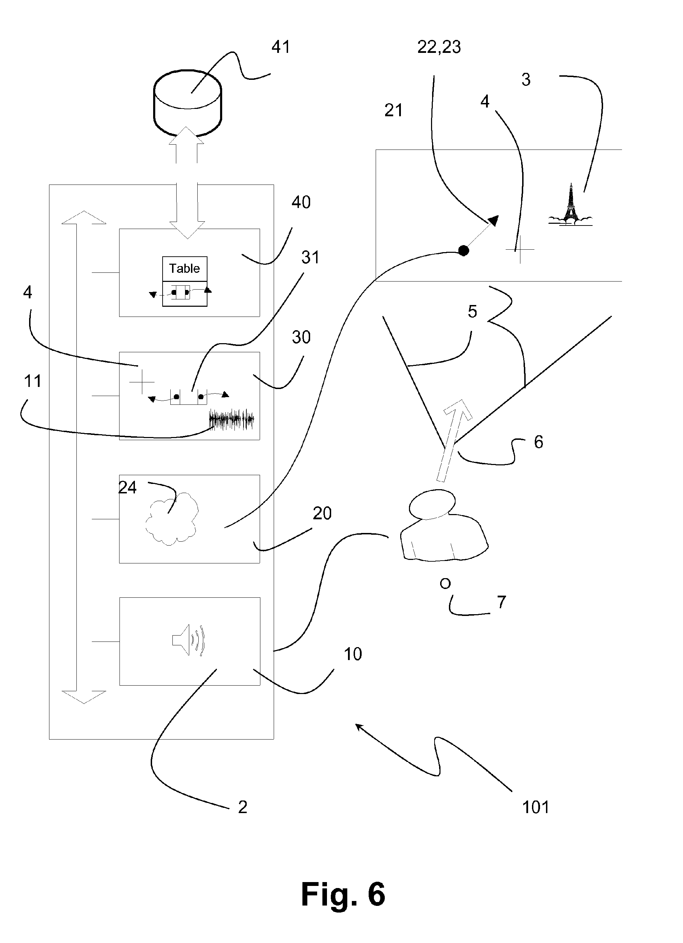

Fig. 6 illustrates an embodiment of an audio playback system 101 configured to sound an audio sequence 2.

Referring to the elements disclosed in the previous figures, the audio playback system 101 may be configured to play an audio signal 2 tagged to an object 3 or a geographic point of interest 4 in a field of view 5 observed in a direction of observation 6 from a geographic point of observation 7.

The audio playback system 101 illustrated in this embodiment may have a selecting unit 20 that is configured to select an object 3 or a geographic point of interest 4 in the field of view 5, which may also be a field of view from a field of view capture or an image 70.

The audio playback system 101 may also have or be connected to a data storage connection unit 40 that is configured to connect to at least one database 41 and to retrieve an audio signal 2 with a tag 31 of at least one selected object 23 or a selected geographic point of interest 22.

The audio playback unit 101 is configured with an audio unit 10 configured to sound the tagged audio signal 2 through a loudspeaker.

It is appreciated that the units disclosed in the audio tagging system 1 may also be included in the audio playback system 101. Likewise it is appreciated that the audio tagging system 1 and the audio playback system 101 may be in one embodiment.

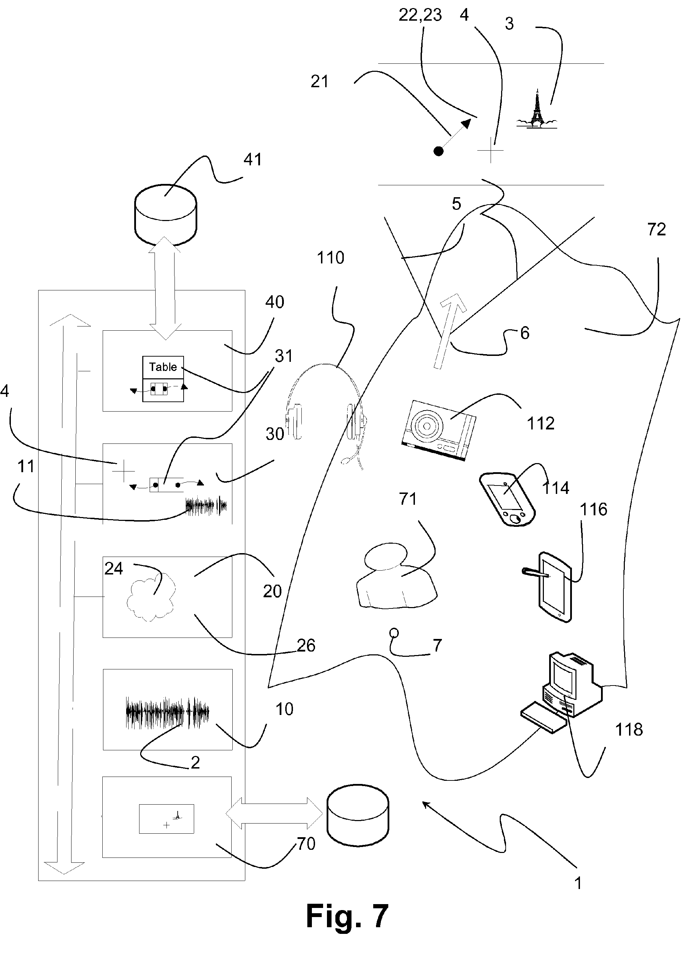

Fig. 7 Illustrates different embodiment or realisations of an audio tagging unit 1. A user 71 is equipped with an audio tagging unit 1 is in a field 72 at a point of observation 7. The audio tagging unit 1 may be part of a head set 110, or variants of a head set such as an audio head set 110', a visual head set 110", i.e. eye wear 110'" such as glasses. The audio tagging system 1 may also be a smart phone 114, a mobile 114, a Personal Display Adapter (PDA) 114, a camera 112, a tablet 116, a laptop 118, or any other suitable portable device.

The user 71 may operate each implementation in the field 72. For example the user 71 standing at the point of observation 7 may wear a head set 110 and look in the direction of observation 6, which in this case is a line of sight 72, and observe the field of view 5 with an object 3 such as the Eiffel tower and a point of interest 4 mapped onto the field of view 5 as a result of obtaining a map 26 from a geographic data including points of interest server based on the coordinates of the point of observation 7 and the direction of observation 6. In this map 26 the user 71 can navigate the selector 21 in the field of view 5.

For example the selector 21 may point at the object 3, the Eiffel Tower, and the user 71 press a button to select the object 23. The user 71 further speaks an audio signal 71 that is recorded by the audio unit 10 and linked with the object 3 with the tagging unit 30 thereby tagging the object 3 with the recorded audio signal 71.

The audio tagging system 1 is further configured with a field of view capture unit 70, such as a digital camera to capture an image with records about point of observation 7 and direction of observation 6 as well as viewing angle or a frame. The capture may also include retrieved points of interests 4 or geographic information or content information about objects 3.

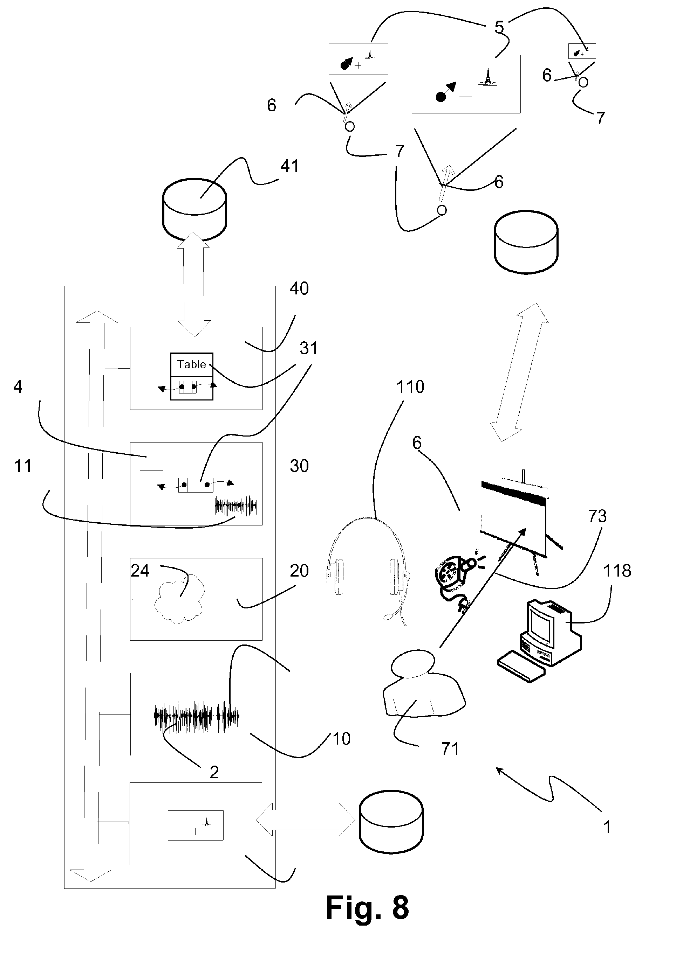

Fig. 8 illustrates a user 71 using an audio tagging system 1 in a stationary setting such as editing. The audio tagging system 1 may be embedded in a head set 110, a PC as intended and in the form of a personal computer 118 a work station 118', a control room 122, a projector setup 120, a simulator 124, or any other stationary setting.

In this configuration the user 71 makes the audio tagging system 1 retrieve fields of view 5 recorded from points of observations 7 in directions of observations 6 from the archive and displays them so that the user 71 can control the selector 21 in the recalled field of view 5. In this case the geographic information about the objects 3 and points of interest 4 are embedded in the retrieved field of view captures 70. In other the geographic information or further information about points of interest 4 and objects may be retrieved form dedicated servers.

The user 71 may select a point of interest 22 or select an object 23 on the projector setup 120 by navigating the selector 21 in the field of view 5 being displayed at a screen in the projector setup 120. The user 71 may record or speak an audio 2 that will then be associated with the selected point of interest 22 or selected object 23 thereby tagging 31 such point of interest 22 or selected object 23 with an audio sequence 22.

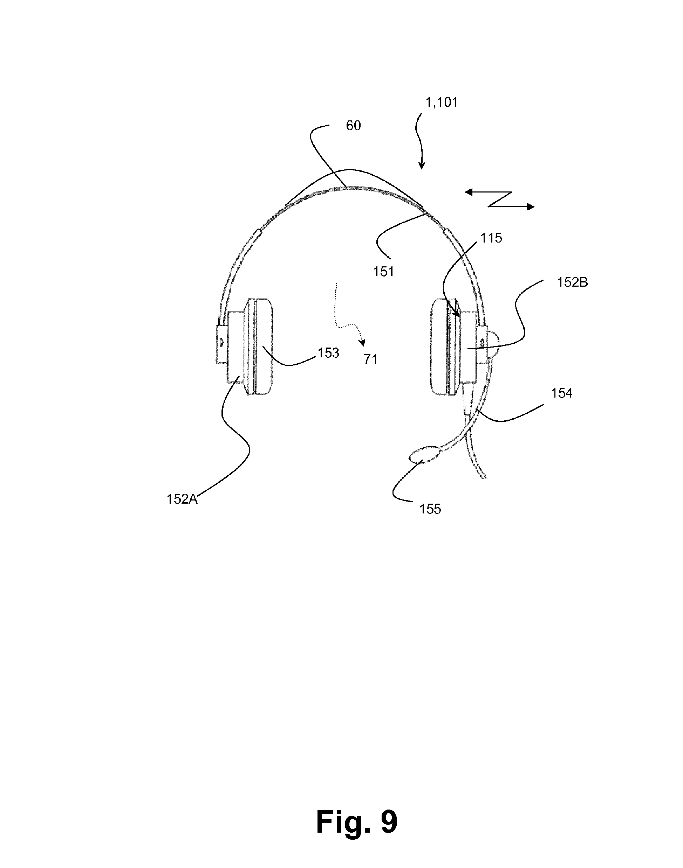

Fig. 9 shows an exemplary headset 110 of the audio tagging system 10, having a headband 151 carrying two earphones 152A, 152B similar to a conventional corded headset with two earphones interconnected by a headband.

Each earphone 152A, 152B of the illustrated headset 110 comprises an ear pad 153 for enhancing the user comfort and blocking out ambient sounds during listening or two-way communication.

A microphone boom 154 with a voice microphone 155 at the free end extends from an earphone 152B. The ear pad 153 is used for picking up the user's voice e.g. during two-way communication via a mobile phone network and/or for reception of user commands to the audio tagging system 1.

The audio tagging system 10 presented as a headset 110 has a communications system for communication with external devices. This may be a Bluetooth link or alike. A Bluetooth transceiver in the earphone may be wirelessly connected by a Bluetooth link to a Bluetooth transceiver a hand-held device (not shown).

A similar headset 110 may be provided without the microphone boom, whereby the microphone is provided in a housing on the cord as is well-known from prior art headsets.

An inertial measurement unit or orientation unit 60 is accommodated in a housing mounted on or integrated with the headband 151 and interconnected with components in the earphone housing through wires running internally in the headband 151 between the orientation unit 60 and the earphones 152A, 152B.

The user interface of the headset 110 is not shown, but may include one or more push buttons, and/or one or more dials as is well-known from conventional headsets.

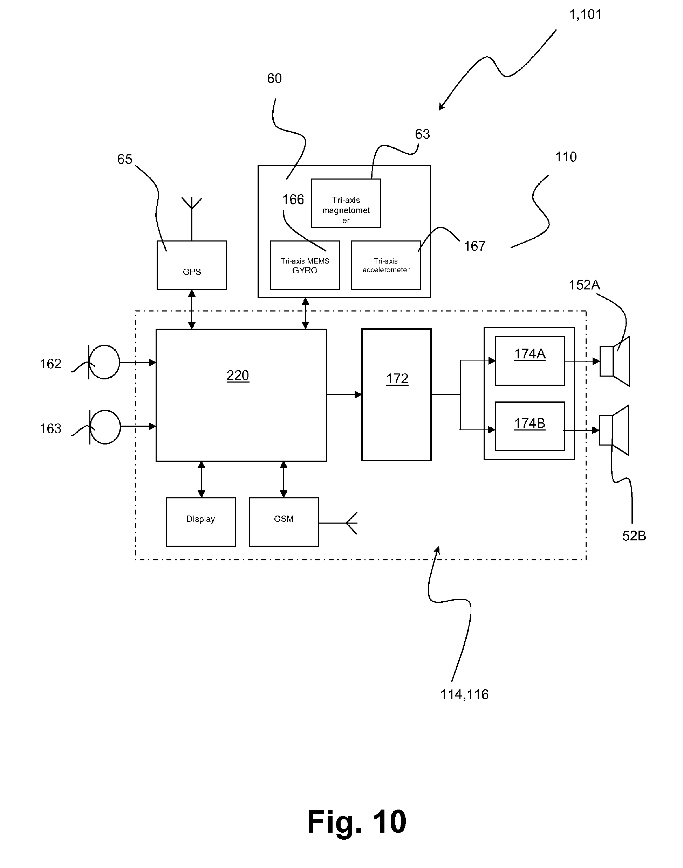

Fig. 10 shows a block diagram of an audio tagging system 1 comprising a headset 110 and a hand-held device 114,116.

The various components of the system may be distributed otherwise between the headset 110 and the hand-held device 114,116. For example, the hand-held device 114,116 may accommodate the GPS-receiver 65.

Another system may not have a hand-held device 114,116 so that all the components of the system are accommodated in the headset 110. The system without a hand-held device 114,116 does not have a display, and speech synthesis is used to issue messages and instructions to the user and speech recognition is used to receive spoken commands from the user.

The illustrated audio tagging system 1 comprises a headset 110 comprising electronic components including two loudspeakers 152A, 152B for emission of sound towards the ears of the user 71 (not shown), when the headset 110 is worn by the user 71 in its intended operational position on the user's 71 head.

It should be noted that in addition to the headset 110 shown in Fig, 10, the headset 110 may be of any known type including an Ear-Hook, In-Ear, On-Ear, Over-the-Ear, Behind-the-Neck, Helmet, Head guard, etc, headset, headphone, earphone, ear defenders, earmuffs, etc.

The illustrated headset 110 has a voice microphone 162 e.g. accommodated in an earphone housing or provided at the free end of a microphone boom mounted to an earphone housing.

The headset 110 further has one or two ambient microphones 163, e.g. at each ear, for picking up ambient sounds.

The headset 110 has an orientation unit 60 positioned for determining head yaw, head pitch, and/or head roll, when the user wears the headset 110 in its intended operational position on the user's head.

The illustrated orientation unit 60 has tri-axis MEMS gyros 166 that provide information on head yaw, head pitch, and head roll in addition to tri-axis accelerometers 167 that provide information on three dimensional displacement of the headset 110.

The headset 110 also has a location unit or a geographical position system unit, which in this case is a GPS-unit 65 for determining the geographical position of the user, when the user wears the headset 110 in its intended operational position on the head, based on satellite signals in the well-known way. Hereby, the user's point of observation 7 and direction of orientation 6 may be provided to the user based on data from the headset 110.

Optionally, the headset 110 accommodates a GPS-antenna configured for reception of GPS-signals, whereby reception of GPS-signals is improved in particular in urban areas where, presently, reception of GPS-signals may be difficult.

In a headset 110 without the GPS-unit 65, the headset 110 has an interface for connection of the GPS-antenna with an external GPS-unit, e.g. a hand-held GPS-unit, whereby reception of GPS-signals by the hand-held GPS-unit is improved in particular in urban areas where, presently, reception of GPS-signals by hand-held GPS-units may be difficult.

The illustrated orientation unit 60 also has a magnetic compass in the form of a tri-axis magnetometer 63 facilitating determination of head yaw with relation to the magnetic field of the earth, e.g. with relation to Magnetic North.

The hand-held device 114,116 of the audio tagging system 1 has a computational unit 220 or a separate processor unit with input/output ports connected to the sensors of the orientation unit 60, and configured for determining and outputting values for head yaw, head pitch, and head roll, when the user wears the headset 110 in its intended operational position on the user's head.

The computational unit 220 may further have inputs connected to accelerometers of the orientation unit 60, and configured for determining and outputting values for displacement in one, two or three dimensions of the user when the user wears the headset 110 in its intended operational position on the user's head, for example to be used for dead reckoning in the event that GPS-signals are lost.

Thus, the illustrated audio tagging system 10 is equipped with a complete attitude heading reference system (AHRS) for determination of the orientation of the user's head that has MEMS gyroscopes, accelerometers and magnetometers on all three axes. The computational unit provides digital values of the head yaw, head pitch, and head roll based on the sensor data.

The headset 110 has a data interface for transmission of data from the orientation unit 60 to the computational unit 220 of the hand-held device 114,116, e.g. a smart phone with corresponding data interface. The data interface may be a Bluetooth Low Energy interface.

The headset 110 further has a conventional wired audio interface for audio signals from the voice microphone162, and for audio signals to the loudspeakers 152A, 152B for interconnection with the hand-held device 114,116 with corresponding audio interface.

This combination of a low power wireless interface for data communication and a wired interface for audio signals provides a superior combination of high quality sound reproduction and low power consumption of the audio tagging system 1.

The headset 110 has a user interface (not shown), e.g. with push buttons and dials as is well-known from conventional headsets, for user control and adjustment of the headset 110 and possibly the hand-held device 114,116 interconnected for selection of media to be played.

The hand-held device 114,116 receives head yaw from the orientation unit 60 of the hearing device 10 through the wireless interface 16. With this information, the hand-held device 114,116 may display maps on its display in accordance with orientation of the head of the user as projected onto a horizontal plane, i.e. typically corresponding to the plane of the map. For example, the map may automatically be displayed with the position of the user at a central position of the display, and the current head x-axis pointing upwards.

The user may use the user interface of the hand-held device 60 to input information on a geographical position the user desires to visit in a way well-known from prior art hand-held GPS-units.

The hand-held device 60 may display maps with a suggested route to the desired geographical destination as a supplement to the aural guidance provided through the headset 110.

The hand-held device 60 may further transmit spoken guiding instructions to the headset 110 through the audio interfaces is well-known in the art, supplementing the other audio signals provided to the headset 110.

In addition, the microphone of headset 110 may be used for reception of spoken commands by the user, and the computational unit 220 may be configured for speech recognition, i.e. decoding of the spoken commands, and for controlling the audio tagging system 1 to perform actions defined by respective spoken commands.

The hand-held device 60 filters the output of a sound generator 172 of the hand-held device 60 with a pair of filters 174A, 174B with an HRTF into two output audio signals, one for the left ear and one for the right ear, corresponding to the filtering of the HRTF of a direction in which the user should travel in order to visit a desired geographical destination.

This filtering process causes sound reproduced by the headset 110 to be perceived by the user as coming from a sound source localized outside the head from a direction corresponding to the HRTF in question, i.e. from a virtual sonar beacon located at the desired geographical destination.

In this way, the user is relieved from the task of watching a map in order to follow a suitable route towards the desired geographical destination.

The user is also relieved from listening to spoken commands intending to guide the user along a suitable route towards the desired geographical destination.

Further, the user is free to explore the surroundings and for example walk along certain streets as desired, e.g. act on impulse, while listening to sound perceived to come from the direction toward the desired geographical destination (also) to be visited, whereby the user is not restricted to follow a specific route determined by the audio tagging system 1.

The sound generator 172 may output audio signals representing any type of sound suitable for this purpose, such as speech, e.g. from an audio book, radio, etc, music, tone sequences, etc.

The user may for example decide to listen to a radio station while walking, and the sound generator 172 generates audio signals reproducing the signals originating from the desired radio station filtered by pair of filters 174A, 174B with the HRTFs in question, so that the user perceives to hear the desired music from the direction towards the desired geographical destination to be visited at some point in time.

At some point in time, the user may decide to follow a certain route determined and suggested by the audio tagging system 1, and in this case the processor controls the HRTF filters so that the audio signals from the sound generator or loudspeaker are filtered by HRTFs corresponding to desired directions along streets or other paths along the determined route. Changes in indicated directions will be experienced at junctions and may be indicated by increased loudness or pitch of the sound. Also in this case, the user is relieved from having to visually consult a map in order to be able to follow the determined route.

The audio tagging system 10 may be operated without using the visual display, i.e. without the user consulting displayed maps, rather the user specifies desired geographical destinations with spoken commands and receives aural guidance by sound emitted by the headset 110 in such a way that the sound is perceived by the user as coming from the direction towards the desired geographical destination.

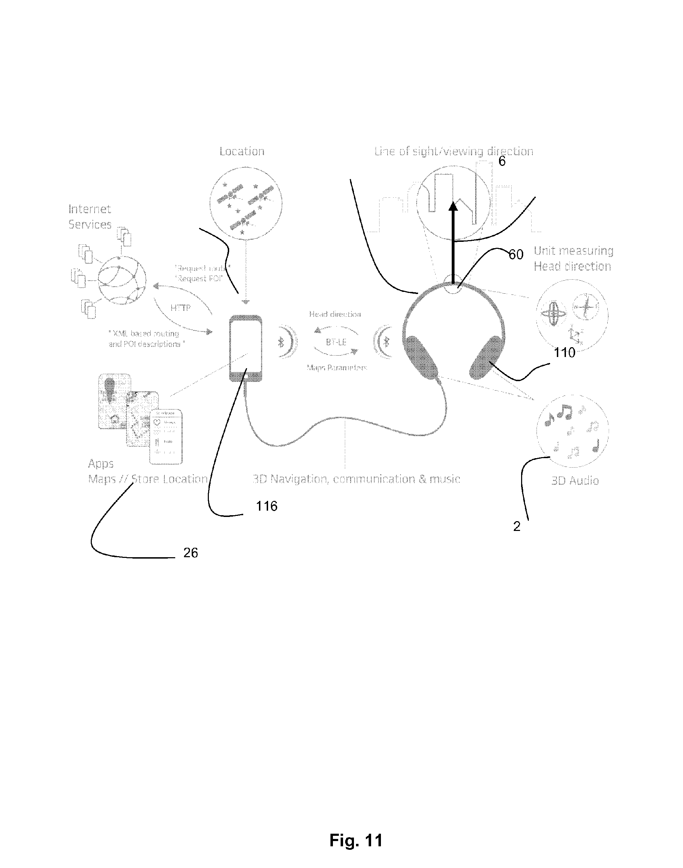

Fig. 11 illustrates a configuration and operation of an example of the audio tagging system 1 shown in Fig. 10, with the headset 110 together with a hand-held device 114,116, which in the illustrated example is a smart phone, with a personal navigation app containing instructions for the processor or computational unit of the smart phone to perform the operations of the computational unit 220 of the audio tagging system 1 and of the pair of filters 74A, 74B, with an HRTF. The headset 110 is connected to the smart phone 60 with a chord providing a wired audio interface between the two units 116, 110 for transmission of speech and music from the smart phone 114 to the hearing device 10, and speech from the voice microphone (not shown) to the smart phone 114 as is well-known in the art.

As indicated in Fig. 11 by the various exemplary GPS-images displayed on the smart phone 114 display, the personal navigation app is executed by the smart phone in addition to other tasks that the user selects to be performed simultaneously by the smart phone 114, such as playing music, and performing telephone calls when required.

The personal navigation app configures the smart phone 114 for data communication with the headset 110 through a Bluetooth Low Energy wireless interface available in the smart phone 116 and the headset 110, e.g. for reception of head yaw from the orientation unit 60 of the headset 110. In this way, the personal navigation app may control display of maps on the display of the smart phone 60 in accordance with orientation of the head of the user as projected onto a horizontal plane, i.e. typically corresponding to the plane of the map. For example, the map may be displayed with the position of the user at a central position of the display, and the head x-axis pointing upwards.

During navigation, the audio tagging system 1 operates to position a virtual sonar beacon at a desired geographical location, whereby a guiding sound signal is transmitted to the ears of the user that is perceived by the user to arrive from a certain direction in which the user should travel in order to visit the desired geographical location. The guiding sound is generated by a sound generator of the smart phone 114, and the output of the sound generator 72 is filtered in parallel with the pair of filters 74A, 74B of the smart phone 60 having an HRTF so that an audio signal for the left ear and an audio signal for the right ear are generated. The filter functions of the two filters approximate the HRTF corresponding to the direction from the user to the desired geographical location taking the yaw of the head of the user into account.

The user may calibrate directional information by indicating when his or her head x-axis is kept in a known direction, for example by pushing a certain push button when looking due North, typically True North. The user may obtain information on the direction due True North, e.g. from the position of the Sun on a certain time of day, or the position of the North Star, or from a map, etc.

The user may calibrate directional information by indicating when his or her head x-axis is kept in a known direction, for example by pushing a certain push button when looking due North, typically True North. The user may obtain information on the direction due True North, e.g. from the position of the Sun on a certain time of day, or the position of the North Star, or from a map, etc.

At any time during use of the audio tagging system, the user may use the user interface to request a spoken presentation of a an address with an address record located along the line of interest which in this case is the field of view or line of sight of the user, e.g. by pushing a specific button located at the audio tagging system 1.

## Claims

1. An audio tagging system (1) configured to associate an audio signal (2) with an object (3) or a geographic point of interest (4) in a field of view (5) observed in a direction of observation (6) from a geographic point of observation (7), the audio tagging system (1) comprising and interfacing
- an audio unit (10) configured to provide an audio signal(2);
- a selecting unit (20) configured to move about a selector (21) in the field of view (5) and to select an object (23) or a geographic point of interest (22) in the field of view (5);
- a tagging unit (30) configured to create a tag (31) associating the selected object (23) or the selected geographic point of interest (22) with the provided audio signal(2);
- a data storage connection unit (40) configured to connect to at least one tag database (41) and to store the tag (31) associated to the selected audio signal (11) with at least one selected object (23) or a selected geographic point of interest (22).

2. An audio tagging system (1) according to claim 1, wherein the selecting unit (20) is further configured to estimate (24) and place the selector (21) at a geographic point of interest (4, 22) or an object (3, 23) in the field of view (5) as a function of a direction of observation (6) and a geographic point of observation (7).

3. An audio tagging system (1) according to claim 1 or claim 2, further comprising a geographical data retrieval unit (25) configured to retrieve a geographical map (26) comprising geographical information (27) or object information (28).

4. An audio tagging system (1) according to any of claim 1 to claim 3, wherein the selecting unit (20) is further configured to estimate a geographic point of interest (4) or an area as an intersection between a line of sight (73) and a surface (72) or an object (3) in a field of view (5) or as a distance along a line of sight (73) in a field of view (5).

5. An audio tagging system (1) according to claim 4, wherein the line of sight (73) is estimated by a orientation unit (60); preferably by a processing unit and as a function of data from a first gyroscope (61) or magnetic compass in the form of a tri-axis magnetometer (63) for determining head yaw or a second gyroscope (63') for determining head pitch in the orientation unit (60); most preferably by data from both a first and a second gyroscope (61,61').

6. An audio tagging system (1) according to any of the previous claims, the audio tagging system (1) being configured to be held or worn and operated by a user (72) in a field (72) as intended and in the form of a head set (110), an audio head set (110'), a visual head set (110") i.e. eye wear (110"') such as glasses, a smart phone (114), a mobile (114), a Personal Display Adapter (114), a camera (112), a tablet (116), a laptop (118), or any other suitable portable device.

7. An audio tagging system (1) according to any of the previous claims, the audio tagging system (1) being configured to be stationary and to be operated by a user as intended and in the form of a personal computer (118), a work station (118), a control room, a projector setup (120), a simulator, or any other stationary setting.

8. An audio tagging system (1) according to any of claim 1 to claim 4, further comprising a geographic orientation unit (60) configured for associating the field of view (5) with a geographic point of observation (7) and from there a direction of observation (6).

9. An audio tagging system (1) according to any of claim 1 to claim 5, further configured to provide a field of view (5) observed in a direction of observation (6) from a geographic point of observation (7); the field of view (5) preferably as an image (74); most preferably as a digital image (74).

10. A method of tagging an audio signal (2) with an object (3) or a geographic point of interest (4) in a field of view (5) observed in a direction of observation (6) from a geographic point of observation (7); the method comprising steps of
- selecting an object (23) or a geographic point of interest (22) in the field of view (5);
- tagging the selected object (23) or selected geographic point of interest (22) with a provided audio signal (2) or providing an audio signal (2);
- storing the tag (31) associated to the selected audio signal (2) with at least one selected object (23) or a selected geographic point of interest (22).

11. A method of tagging an audio signal (2) according to claim 10, the method further comprising steps of
- determining a geographic point of observation (7) and from there a direction of observation (6) in of a field of view (5); and
- selecting a geographic point of interest (4) or an area as an intersection between a line of sight (73) and a surface (72) or an object (3) in a field of view (5) or as a distance along a line of sight (73) in a field of view (5), wherein is estimated by an orientation unit (60).

12. An audio playback system (101) configured to play an audio signal (2) tagged to an object (3) or a geographic point of interest (4) in a field of view (5) observed in a direction of observation (6) from a geographic point of observation (7), the audio playing system (101) comprising and interfacing
- a selecting unit (20) configured to select an object (3) or a geographic point of interest (4) in the field of view (5);
- a data storage connection unit (40) configured to connect to at least one database (41) and to retrieve an audio signal(2) tagged (31) to at least one selected object (23) or a selected geographic point of interest (22);
- an audio unit (10) configured to sound the tagged audio signal(2).

13. An audio playback system (101) according to claim 12, wherein the selecting unit (20) is further configured to estimate a geographic point of interest (4) or an area as an intersection between a line of sight (73) and a surface (72) or an object (3) in a field of view (5) or as a distance along a line of sight (73) in a field of view (5) and where the line of sight (73) is estimated by a orientation unit (60); preferably by a processing unit and as a function of data from a first gyroscope (61) or magnetic compass in the form of a tri-axis magnetometer (63) for determining head yaw or a second gyroscope (61') for determining head pitch in the orientation unit (60); most preferably by data from both a first and a second gyroscope (61').

14. An audio playback system (101) according to claim 12 or claim 13, configured to be held or worn and operated by a user (71) in a field (72) as intended and in the form of a head set (110), an audio head set (110'), a visual head set (110") i.e. eye wear (110"') such as glasses, a smart phone (114), a mobile (114), a Personal Display Adapter (114), a camera (112), a tablet (116), a laptop (118)

15. Method playing back (201) an audio signal (2) tagged to an object (3) or a geographic point of interest (4) in a field of view (5) observed in a direction of observation (6) from a geographic point of observation (7); the method comprising steps of
- selecting an object (23) or a geographic point of interest (22) in the field of view (5);
- retrieving an audio signal (2) that has been tagged to the selected object (23) or the geographic point of interest (22) to the audio signal (2);
- sounding the audio signal (2).
